# EUROPEAN PATENT APPLICATION

(11) **EP 2 944 792 A1**
(43) Date of publication of application: **18.11.2015**
(21) Application number: 14167914.2
(22) Date of filing: 12.05.2014
(51) Int. Cl.: F02C 3/34, F23R 3/28, F23R 3/14

(54) **Method for operation a burner and combustion system**

(71) Applicant: Siemens Aktiengesellschaft, 80333 München (DE)
(72) Inventor: Janczewski, Jacek, 60376 Norrköping (SE); Johansson, Nicklas, 61732 Skärblacka (SE); Lindman, Olle, 61237 Finspang (SE)

(57) **Abstract**

The invention relates to a method for operating a burner (16), wherein a fuel (84) and an oxidizing working medium (86) are fed into the burner (16), the fuel (84) and the working medium (86) are introduced into a combustion volume (14) and are combusted therein, and an exhaust gas from the combustion is fed back into the burner (16), the exhaust gas, together with oxygen, constituting the working medium (86).

An efficient combustion can be achieved in that the working medium (86) and the fuel (84), prior to being introduced into the combustion volume (14), are mixed together in the burner (16) to generate a combustion medium (88).

## Description

The invention relates to a method for operating a burner, wherein a fuel and an oxidizing working medium are fed into the burner, the fuel and the working medium are introduced into a combustion volume and are combusted therein, and an exhaust gas from the combustion is fed back into the burner, the exhaust gas, together with oxygen, constituting the working medium. Furthermore, the invention relates to a combustion system comprising a burner with a fuel inlet and a working medium inlet, further comprising a pure oxygen supply and exhaust gas feedback, both of which are connected to the working medium inlet.

Combustion processes and combustion systems are employed in many technical fields, particularly in heat/power generation. A major problem in combustion, particularly if hydrocarbon containing fuels are used, is the generation of carbon dioxide (CO₂) and its emission into the atmosphere since carbon dioxide is a greenhouse gas and, thus, contributes to global warming.

One approach for reducing carbon dioxide emission into the atmosphere is the so-called carbon capture and storage (CSS) process. The CSS process includes capturing waste carbon dioxide from a carbon dioxide source, such as a fossil fuel power plant, transporting the carbon dioxide to a storage site, and depositing it where it will not enter the atmosphere, normally in an underground geological formation.

For transporting and storing the carbon dioxide it is requested that the carbon dioxide is, as far as possible, free from impurities. This is because impurities in carbon dioxide can lead to increased corrosion of transport pipelines. Also, impurities can change a phase behavior of the carbon dioxide so that less carbon dioxide can be stored in the storage site.

Also, the carbon dioxide can be injected into a reservoir of crude oil in a process called enhanced oil recovery (EOR) for increasing an amount of the crude oil that can be extracted from the reservoir. In this process the carbon dioxide should be free of impurities, too.

A known combustion process which allows for obtaining impurity-free carbon dioxide, or carbon dioxide with relatively little impurity contents, is the so-called oxy-fuel combustion process. In oxy-fuel combustion a fuel, particularly a hydrocarbon containing fuel, such as methane, is combusted by means of a burner, wherein instead of air pure oxygen (O₂) or a mixture of oxygen with at least one inert gas, such as carbon dioxide and/or water vapor, is used as an oxidizing medium. In this way, carbon dioxide rich combustion products forming an exhaust gas are generated. Said carbon dioxide rich exhaust gas can be processed for transport and storage with less effort and/or less costs than exhaust gas from conventional combustion in which air is used as oxidizing medium. This is because the exhaust gas from oxy-fuel combustion can be basically free from nitrogen and/or nitrogen oxides due to absence of nitrogen in the oxidizing medium, and because most other combustion products, such as water vapor, can be easily extracted from the exhaust gas, for instance by means of condensation.

Due to the absence of nitrogen which, if present, would be heated during combustion and, thus, would consume energy, a higher flame temperature can be reached in oxy-fuel combustion. In particular, the temperature can be too high for certain applications. To limit/reduce the flame temperature to levels common during conventional combustion, a portion of the exhaust gas produced in oxy-fuel combustion is fed back to the burner and is used as a constituent of an oxidizing working medium which, apart from the carbon dioxide and possibly water vapor, comprises the pure oxygen.

A particular concern of the oxy-fuel combustion process is balancing an amount of the oxygen in the working medium. Oxygen excess in the working medium is a major problem since oxygen production is cost-intensive and/or energy-consuming. In particular, oxygen production can consume up to 25% of the energy produced in oxy-fuel combustion. Oxygen deficiency in the working medium generally leads to an inefficient combustion.

An inefficient combustion can benefit generation of undesired combustion products (impurities) which can necessitate additional processing of the exhaust gas, especially if the exhaust gas is supposed to be transported to a storage site and stored. Also, an inefficient combustion can reduce power generated during the combustion due to decreased thermal efficiency of a thermodynamic cycle. Thus, an inefficient combustion may cause high costs, high effort, high energy consumption and/or reduce power generated during the combustion.

One objective of the invention is to provide a method for operating a burner by which an efficient combustion can be achieved.

This objective is accomplished by means of a method of the type mentioned in the introduction, wherein, according to the invention, the working medium and the fuel, prior to being introduced into the combustion volume, are mixed together in the burner to generate a combustion medium.

The invention is based on the finding that a degree of mixture of the working medium and the fuel crucially influences combustion efficiency. In particular, combustion efficiency can be increased at an increasing degree of mixture of the working medium and the fuel. A higher degree of mixture of the working medium and the fuel can be achieved, if the working medium and the fuel are pre-mixed, i.e., mixed together prior to being introduced into the combustion volume. This is because, in the combustion volume, intermixing of the working medium and the fuel is mainly determined by diffusion of the working medium and the fuel and, thus, normally occurs on a long time scale as compared to pre-mixing the working medium and the fuel by means of an apparatus.

"Efficient combustion", or "combustion efficiency" respectively, may concern, among other things, a spatial distribution of pressure, temperature, gas velocity and/or reaction rate in the combustion volume. Both terms may also concern power generated during the combustion, or a ratio of the power generated to a fired power respectively. For instance, achieving an efficient combustion can mean that the ratio of the power generated during the combustion to the fired power can be kept basically constant, particularly for an altering ratio of the fuel to the oxygen in the combustion volume and/or for an altering composition of the working medium. Also, achieving an efficient combustion can mean that a basically homogeneous distribution of pressure, temperature, gas velocity, and/or reaction rate in the combustion volume can be realized, particularly for an altering ratio of the fuel to the oxygen in the combustion volume and/or for an altering composition of the working medium.

The term "combustion volume" may refer to a volume in which combustion occurs or which is made for combustion, respectively. The combustion volume may be, but is not necessarily restricted to, a volume defined by a combustion chamber.

The combustion medium may be understood as a combustible mixture of the working medium and the fuel, i.e., oxygen, exhaust gas and fuel.

Advantageously, the working medium and the fuel are swirled by means of a swirling device. In doing so, a mixing of the fuel and the working medium is positively affected. In particular, the combustion medium can be generated by swirling the working medium and the fuel. Thus, a swirl-stabilized flame may be generated from the combustion medium.

It is expedient, if the fuel is introduced, particularly injected, into the working medium in the swirling device. This allows for preventing an undesired reaction between the fuel and the working medium until the fuel and the working medium are mixed together in the swirling device.

Further, it is advantageous, if the working medium is introduced into a plenum of the burner. Preferably, the working medium is introduced into the plenum through a constriction. The oxygen and the exhaust gas can be intermixed in the plenum by passing through the constriction. This can effect a spatially homogenized mixture of the oxygen and the exhaust gas in the working medium.

In a preferred embodiment, the working medium is deflected in the constriction, particularly around a deflection plate. Preferably, the working medium is deflected in the constriction by at least 90°.

Also, it is preferred, if the working medium is divided into two partial flows. The two partial flows can be introduced into separate conduits, particularly into separate working medium conduits of the burner, in each case. Furthermore, the two partial flows of the working medium can be employed for generating two flows of the combustion medium. The two flows of the combustion medium can be used for controlling a spatial dimension of a flame generated from the combustion medium and/or for controlling a temperature, or spatial temperature distribution respectively, of the flame.

The two partial flows may differ in their respective flow rates. Moreover, the flow rate of one of the two partial flows can be in a fixed ratio to a flow rate of the other of the two partial flows. For instance, said ratio may be 1:2. Preferentially, the fuel is admixed to one of the two partial flows to form a first portion of the combustion medium. The first portion combustion medium may be ignited, particularly by means of an ignition device. Further, the fuel can be admixed to the other of the two partial flows to form a second portion of the combustion medium. Preferably, this additional admixing is started only after the ignition of the combustion medium of the first flow.

In a preferred embodiment, the combustion medium is forced into a helical flow, i.e., into a flow with a radial and an axial velocity component, within the burner. Expediently, the combustion medium is forced into the helical flow by means of the swirling device. Further, the helical flow can be introduced into the combustion volume. Preferentially, the helical flow expands radially upon entering the combustion volume. A flow recirculation zone/vortex breakdown zone may be generated in the combustion volume, particularly due to a pressure/density gradient along a radial and/or an axial direction with respect to the helical flow, the pressure gradient(s) forcing the helical flow to breakdown. In the flow recirculation zone/vortex breakdown, the exhaust gas and possibly an unburnt portion of the combustion medium may recirculate, i.e., may move back and forth in a circular motion. Advantageously, the flow recirculation zone stabilizes the combustion or a flame generated in the combustion, respectively.

Further, adjusting combustion conditions, such as firing temperature, fired power and/or combustion efficiency, can be realized by adjusting an oxygen percentage in the working medium, by adjusting a rate of fuel flow into the burner, by adjusting a fuel split to the partial flows of the working medium and/or by adjusting a rate of working medium flow into the burner.

The above-described method can be employed in operation of a gas turbine, wherein a burner of the gas turbine can be operated according to the above-described method.

In operation of the gas turbine, a turbine shaft may be set into rotation, for instance by means of a motor. Expediently, a first portion of the fuel is introduced into a first fuel conduit of the burner, particularly triggered by the rotation frequency of the turbine shaft when exceeding a predefined rotation frequency. The first portion of the fuel can be used to generate a first portion of the combustion medium.

The first portion of the combustion medium can be introduced into the combustion volume. In the course of introducing the first portion of the combustion medium into the combustion volume, the first portion of the combustion medium can be ignited to generate a flame.

Advantageously, a rate of fuel flow into the first fuel conduit is set such that the first portion of the combustion medium comprises a predefined ratio, particularly a stoichiometric ratio, of the fuel to the oxygen. This allows for an efficient utilization of the fuel and/or the oxygen for the combustion. Also, this allows for preventing formation of undesired combustion products, such a carbon monoxide. The "stoichiometric ratio" of the fuel to the oxygen may refer to a mole ratio at which a complete combustion can occur, i.e., a ratio at which, in principle, every molecule constituting the fuel can get oxidized to its highest oxidation state. Thus, at the stoichiometric ratio a chemical equilibrium can prevail. For instance, the stoichiometric ratio of the fuel to the oxygen can be 1:2, particularly if methane is used as the fuel.

Furthermore, a second portion of the fuel may be introduced into a second fuel conduit of the burner, particularly when said flame reaches a predefined power. The second portion of the fuel can be used to generate a second portion of the combustion medium.

The second portion of the combustion medium may be introduced into the combustion volume. Further, the second portion the combustion medium can be combusted in the combustion volume, particularly with the aid of said flame. The combustion of the second portion of the combustion medium may extend afore-mentioned flame and/or increase fired power.

Another objective of the invention is to provide a combustion system by which an efficient combustion can be achieved.

This objective is accomplished by means of a combustion system of the type mentioned in the introduction, wherein, according to the invention, the burner comprises a mixer, a working medium conduit connected to the working medium inlet and a fuel conduit connected to the fuel inlet, the working medium conduit and the fuel conduit opening into the mixer.

Preferably, the burner of the combustion system is the burner used by the method as described above. On the other hand, the above-described method may be used for operating the burner of the combustion system.

The phrase "connected to" can be considered as directly or indirectly connected to.

The exhaust gas feedback may comprise at least one line for feeding back an exhaust gas to the working medium inlet of the burner. Additionally, the exhaust gas feedback may comprise a post-treatment device for post-treating the exhaust gas, particularly for separating undesired combustion products from the exhaust gas prior to introducing the exhaust gas into the burner, for example by means of condensation.

The pure oxygen supply can comprise a pure oxygen storage, particularly embodied as gas tank, in which pure oxygen is stored. Further, the pure oxygen supply may be equipped with an oxygen feed line from the pure oxygen storage to the working medium inlet. In this context, pure oxygen can be regarded as a gas/gas mixture with an oxygen percentage of at least 90%.

Further, the working medium conduit and/or the fuel conduit may comprise several sections, particularly sections of different cross-sectional area. One or more of these sections may be of annular shape.

The mixer can exhibit a mixing chamber. Advantageously, the mixer comprises a swirling device for generating a swirl. Moreover, the swirling device can either be an axial-flow swirling device or a radial-flow swirling device. An axial-flow swirling device can be perceived as a device for swirling a fluid without essentially changing a translational flow direction of a flow of said fluid. A radial-flow swirling device can be perceived as a device for swirling a fluid whilst deflecting a flow of the fluid, particularly deflecting the flow basically perpendicularly.

Preferably, the burner is designed as a two-stage burner. By this means, it is possible to generate and/or conduct two partial flows of a working medium in the burner. Further on, it is possible to conduct two flows of a fuel and/or two flows of a combustion medium in a two-stage burner. Thus, the burner may exhibit two working medium conduits, two fuel conduits and/or two mixers.

One of the two working medium conduits and one of the two fuel conduits may open into a first of the two mixers. Accordingly, the other of the two working medium conduits and the other of the two fuel conduits may open into a second of the two mixers.

It is preferred, if the burner is provided with two fuel inlets. This allows for different fuel inflows into the two fuel conduits as one of the two fuel conduits can be supplied with fuel by a first of the two fuel inlets whereas the other of the two fuel conduits can be supplied with fuel by a second of the two fuel inlets. To save space and/or to simplify scope and complexity of flow control and distribution equipment, it is preferred, if the burner is provided with exactly one working medium inlet.

Furthermore, the burner can comprise two swirling devices, preferably one for each of the two mixers. One of the two swirling devices can be an axial-flow swirling device and the other of the two swirling devices can be a radial-flow swirling device.

Expediently, the axial-flow swirling device comprises a plurality of vanes, particularly radially twisted vanes. These vanes can exhibit orifices for introducing the fuel into a partial flow of the working medium. The vanes may be arranged annularly. Moreover, the vanes can be equally spaced, especially equally spaced in circumference.

Preferably, the radial-flow swirling device comprises an injection device for introducing, particularly injecting, the fuel into another partial flow of the working medium. The injection device can feature several fuel pegs. Each of the fuel pegs can exhibit orifices for generating fuel jets. Said fuel jets can penetrate into the working medium while the working medium flows through the radial-flow swirling, thus generating the combustion medium. Preferentially, the fuel pegs are circularly arranged, more particularly circularly and equidistantly arranged.

In a preferred embodiment, the burner is provided with a nozzle, particularly as an outlet for the combustion medium. By this means, a combustion medium flow can be accelerated, thus, allowing for extending and/or spatially homogenizing a flame generated from the combustion medium. Further on, the nozzle may be basically circular, basically conical/frusto-conical or may have a more complex geometry.

Preferentially, the burner comprises a first nozzle, particularly a basically circular nozzle, and a second nozzle, particularly a basically frusto-conical nozzle. Both nozzles may be arranged coaxially with respect to each other. Also, the first nozzle may be arranged within the second nozzle at least sectionally. In this way, a space-saving arrangement of the first and the second nozzle can be realized.

A portion of the combustion medium generated in the radial swirling device can be forced into a helical flow by means of the radial swirling device. Further, a portion of the combustion medium generated in the axial swirling device can be forced into a helical flow by means of the axial swirling device.

By discharging one or both of these helical flows of the combustion medium through the respective nozzle, a flow recirculation zone/vortex breakdown zone can be created in the combustion volume, particularly in a vicinity of the nozzles. Due to recirculation of the exhaust gas in the recirculation zone a stable/swirl-stabilized flame may be achieved.

A spatial size of the flow recirculation zone, a position of the flow recirculation zone and/or a recirculation rate of a flow recirculating therein may be determined by geometrical features of at least one of the swirling devices, such as by a twist angle of the vanes of the swirling device. The spatial size of the flow recirculation zone, the position of the flow recirculation zone and/or the recirculation rate may also be determined by an area ratio of a burner outlet cross-section to a combustion volume cross-section, by flow kinematics and/or by geometrical features of at least one of the nozzles. A stable combustion and/or a stable flame position may be affected by the size, the position of the flow recirculation zone and/or the recirculation rate.

Advantageously, the burner comprises a plenum, particularly an annular plenum. Said plenum can be connected to one or more working medium conduits of the burner. Moreover, one or more working medium conduits of the burner may be connected to the working medium inlet by means of the plenum.

Further it is advantageous, if the burner exhibits a constriction, preferably arranged upstream the plenum. The plenum and the constriction may serve as means of mixing constituents of the working medium, particularly of as means of spatially homogenizing a pre-existing mixture of the constituents in the working medium. Said constriction can be formed, for instance, by a deflection plate for deflecting a working medium flow.

Furthermore, the burner may comprise a flow conditioner for discharging the working medium out of the plenum. The flow conditioner can be designed as a strainer. Preferably, the burner comprises two flow conditioners. One of the two flow conditioners may be provided for discharging the working medium out of the plenum into a first of the two working medium conduits. The other of the two flow conditioners may be provided for discharging the working medium out of the plenum into a second of the two working medium conduits.

Both flow conditioners can, among other things, differ in their respective orifice number, orifice size(s), orifice distance(s) and/or in one of their dimensions.

Moreover, it is expedient, if the burner features an ignition device, such as a spark igniter or a torch igniter, for igniting the combustion medium. The ignition device may be arranged along a central axis of the burner. Also, the ignition device can be arranged within a nozzle, particularly in the aforementioned first nozzle, at least sectionally.

Even if terms are used in the singular or in a specific numeral form, the scope of the invention should not be restricted to the singular or the specific numeral form. Where applicable the indefinite article "a" can be regarded as "at least one".

The previously given description of advantageous embodiments of the invention contains numerous features which are partially combined with one another in the dependent claims. Expediently, these features can also be considered individually and be combined with one another into further suitable combinations. More particularly, these features can be combined with the method and the combustion system according to the respective independent claim individually as well as in any suitable combination. Furthermore, features of the method, formulated as apparatus features, can be considered as features of the combustion system and, accordingly, features of the combustion system, formulated as method features, can be considered as features of the method.

The above-described characteristics, features and advantages of the invention and the manner in which they are achieved can be understood more clearly in connection with the following description of an exemplary embodiment which will be explained with reference to the drawings. The exemplary embodiment is intended to illustrate the invention, but is not supposed to restrict the scope of the invention to combinations of features given therein, neither with regard to functional features. Furthermore, suitable features of the exemplary embodiment can also be explicitly considered in isolation and/or be combined with any of the appended claims.

In the drawings display:
- FIG 1: a schematic overview of a combustion system comprising a pure oxygen supply, a fuel supply, an exhaust gas feedback, a generator and a gas turbine with a burner;
- FIG 2: a schematic and sectional view of the burner from FIG 1 comprising, among others, an axial-flow swirling device and a radial-flow swirling device; and
- FIG 3: a schematic and sectional view of the radial-flow swirling device from FIG 2.

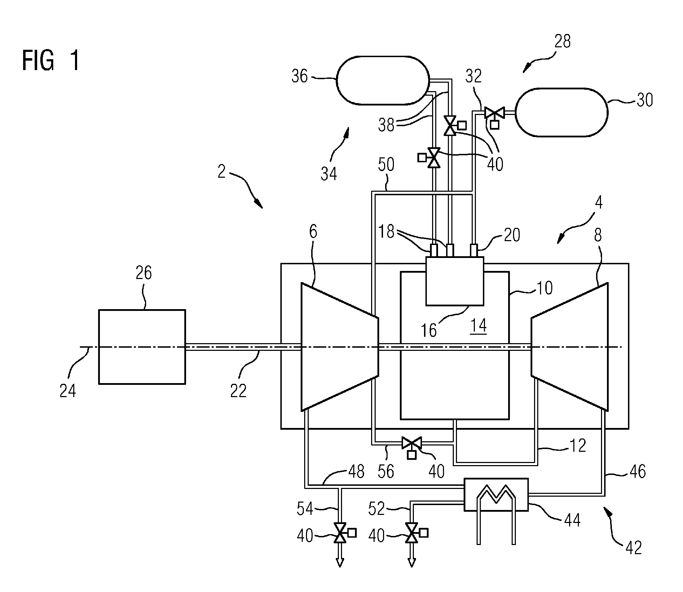

FIG 1 shows a schematic overview of a combustion system 2. The combustion system 2 comprises a gas turbine 4 which exhibits a compressor 6, an expander 8 and a combustion chamber 10 arranged in between, wherein the combustion chamber 10 is connected to the expander 8 via a first transport line 12.

The combustion chamber 10 encloses a combustion volume 14. Further, a burner 16 is fixed to the combustion chamber 10. Said burner 16 exhibits two fuel inlets 18 as well as a working medium inlet 20.

Further on, the gas turbine 4 comprises a turbine shaft 22 which is rotatable about a rotational axis 24 and which extends longitudinally through the gas turbine 4. The turbine shaft 22 drivingly connects the expander 8 to the compressor 6 as well as to a generator 26 for power generation.

Moreover, the combustion system 2 comprises a pure oxygen supply 28 with a pure oxygen storage 30. Said pure oxygen storage 30 is embodied as a gas tank in which pure oxygen is stored, the oxygen being used a constituent of an oxidizing working medium. Also, the pure oxygen supply 28 comprises an oxygen feed line 32 from the pure oxygen storage 30 to the working medium inlet 20 of the burner 16.

Additionally, the combustion system 2 comprises a fuel supply 34 with a fuel storage 36. The fuel storage 36 is embodied as a gas tank in which a fuel, in the present example methane, is stored. The fuel supply 34 further comprises two fuel feed lines 38 which are connected to the fuel storage 36 and to different fuel inlets 18 of the burner 16 in each case.

The oxygen feed line 32 and the two fuel feed lines 38 are equipped with a valve 40 in each case. These vales 40 are provided for controlling a flow rate of an oxygen flow and a fuel flow to burner 16, respectively.

Furthermore, the combustion system 2 comprises an exhaust gas feedback 42 for feeding back a portion of an exhaust gas, in the present example carbon dioxide and water vapor, to the compressor 6, the exhaust gas being generated in combustion of the fuel with the pure oxygen from the afore-mentioned working medium.

The exhaust gas feedback 42 comprises a post-treatment device 44 for separating a portion of undesired combustion products, such as water vapor, from the exhaust gas. Also, the exhaust gas feedback 42 exhibits a discharge line 46 for discharging the exhaust gas from the combustion chamber 14 through the expander 8. In addition, the exhaust gas feedback 42 comprises a second transport line 48. The post-treatment device 44 is connected to the expander 8 via the discharge line 46. Further, the post-treatment device 44 is connected to the compressor 6 via the second transport line 48.

Moreover, the exhaust gas feedback 42 comprises an exhaust gas feed line 50 which is connected to the compressor 6 as well as to the oxygen feed line 32. By this means, the exhaust gas compressed in the compressor 6 can be conducted from the compressor 6 into the working medium inlet 20 of the burner 16.

The exhaust gas feedback 42 also comprises a first bleed line 52 and a second bleed line 54 both of which are equipped with a valve 40. The first bleed line 52 is connected to the post-treatment device 44, while the second bleed line 54 is connected to the second transport line 48.

The compressor 6, more precisely an outlet of the compressor 6, is connected with the expander 8, more precisely to an inlet of the expander 8, by means of a bypass line 56 which is equipped with a valve 40. This valve 40 is provided for controlling a flow rate of the exhaust gas bypassing the burner 16 or the combustion chamber 10, respectively. The bypass line 56 is connected to the compressor 6 as well as to the first transport line 12.

In operation of the gas turbine 4, the exhaust gas generated during combustion is discharged from the expander 8 through the discharge line 46, is post-treated by means of the post-treatment device 44 and is fed into the compressor 6 through the second transport line 48. The exhaust gas is compressed in the compressor 6 and is conveyed to the burner 16.

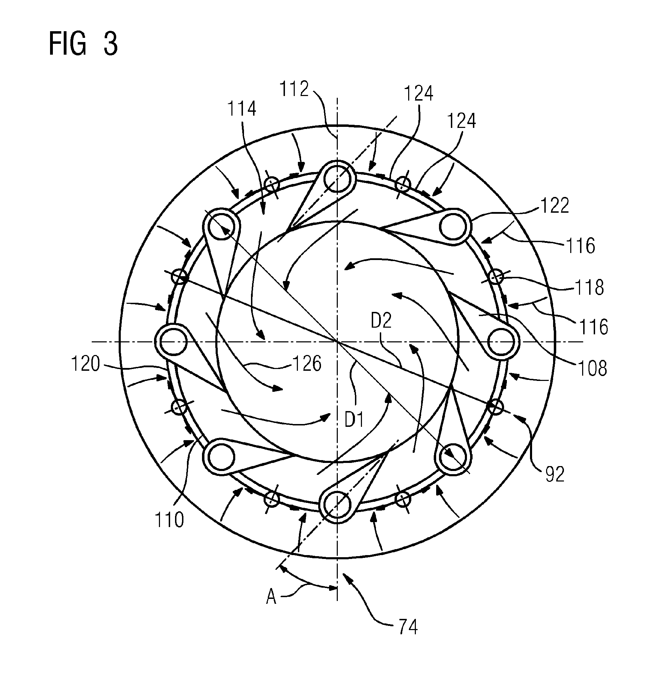

The pure oxygen from the pure oxygen storage 30 is conducted to the burner 16 through the oxygen feed line 32. In the present example, the pure oxygen and the compressed exhaust gas are intermixed in the oxygen feed line 32 due to diffusion, thus, forming the working medium which enters the burner 16 and is further intermixed in a plenum of the burner 16 (cf. FIG 3).

Principally, previous intermixing of the compressed exhaust gas and the pure oxygen could also be realized by means of an external mixing device (not depicted in the figures) which would need to be connected with the oxygen feed line 32, the exhaust gas feed line 50 and the working medium inlet 20 of the burner 16.

The fuel supplied from the fuel supply 34 is introduced into the burner 16 through one or both of the two fuel inlets 18. Further, the fuel and the working medium are mixed together in the burner 16, thus, generating a combustion medium.

The combustion medium is introduced into the combustion volume 14 and, by means of the burner 16, is combusted therein, wherein the exhaust gas is produced. The exhaust gas is channeled via the first transport line 12 to the expander 8. The exhaust gas enters the expander 8, thus, driving the expander 8 which, in turn, rotates the turbine shaft 22.

In order to maintain combustion temperature and flame stability, a portion of the exhaust gas compressed in the compressor 6 is conducted from the compressor 6 to the expander 8 through the bypass line 56, thus, bypassing the burner 16. A flow of this exhaust gas portion passing through the bypass line 56 is controlled by means of the valve 40 arranged in the bypass line 56, which simultaneously controls a portion of the exhaust gas compressed in the compressor 6 entering the burner 16. Alternatively or additionally, the flow of the exhaust gas portion passing through the bypass line 56 could be controlled by means of a fixed orifice.

A portion of the combustion medium leaving the expander 8 through the discharge line 46 and further being conducted in the second transport line 48 is bled off from the second transport line 48 by means of the second bleed line 54.

A portion of the water vapor contained in the exhaust gas from the expander 8 is condensed in the post-treatment device 44 and is bled off through the first bleed line 52.

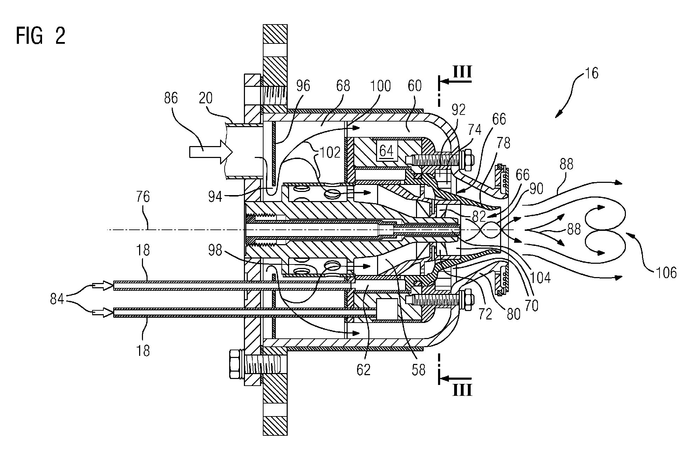

FIG 2 shows the burner 16 from FIG 1 in a schematic and sectional view.

The burner 16 is designed as a two-stage burner comprising two working medium conduits 58, 60 two fuel conduits 62, 64 and two mixers 66. The working medium conduits 58, 60 as well as the fuel conduits 62, 64 have an annular/annular-like shape. Further, the burner 16 comprises an annular plenum 68. The two fuel conduits 60, 62 are connected to a different fuel inlet 18 in each case. Both working medium conduits 58 are connected to the working medium inlet 20 by means of the annular plenum 68.

Each of the two mixers 66 exhibits a mixing chamber 70 with a swirling device 72, 74 arranged therein. The inner swirling device 72, with regard to a central axis 76 of the burner 16, is an axial-flow swirling device and the outer swirling device 74 is a radial-flow swirling device.

Furthermore, the burner 16 comprises a first, basically circular nozzle 78 and a second, basically frusto-conical nozzle 80. Both nozzles 78, 80 are arranged coaxially with respect to each other. Also, the first nozzle 78 is arranged within the second nozzle 80 sectionally.

The inner swirling device 72, i.e., the axial-flow swirling device, comprises a plurality of equally spaced and radially twisted vanes 82. The vanes 82 also exhibit orifices for introducing the fuel 88 into the working medium 86. Furthermore, the vanes 82 force a portion of the combustion medium 88 generated in the inner swirling device 72 into a helical flow 90 in the inner nozzle 72.

The outer swirling device 74, i.e., the radial-flow swirling device, comprises a plurality of equally spaced vanes and an injection device 92 (cf. FIG 3) for injecting the fuel 84 into the working medium 86. These vanes force a portion of the combustion medium 88 generated in the outer swirling device 74 into a helical flow in the outer nozzle 80. (The last-mentioned flow is not depicted in FIG 2 for reasons of clarity.)

In addition, the burner 16 comprises a constriction 94 arranged upstream the plenum 68. Said constriction 94 is formed by a deflection plate 96.

The working medium 86 is introduced into the plenum 68 through the constriction 94 and deflected in the constriction 94 around the deflection plate 96 by more than 90°. The oxygen and the exhaust gas in the working medium 86 are thereby further intermixed and uniformly distributed in the plenum 68.

Aside from that, the burner 16 comprises two flow conditioners 98, 100 for discharging the working medium 86 out of the plenum 68, wherein each of both flow conditioners 98, 100 is embodied as a strainer. One of the two flow conditioners 98 is provided for discharging the working medium 86 out of the plenum 68 into a first of the two working medium conduits 58. The other of the two flow conditioners 100 is provided for discharging the working medium 86 out of the plenum 68 into a second of the two working medium conduits 60.

By means of the two flow conditioners 98, 100, the working medium 86 is divided into two partial flows 102 which are introduced into separate working medium conduits 58, 60 of the burner 16, in each case.

Further on, the burner 16 features an ignition device 104, in the present example a spark igniter. The ignition device 104 is arranged within the first nozzle 78 sectionally, particularly along the central axis 76 of the burner 16.

For starting the gas turbine 4, the turbine shaft 22 is set into rotation by means of a motor (not shown in the figures). When a rotation frequency of the turbine shaft 22 exceeds a predefined rotation frequency, a first portion of the fuel 84 is introduced into the inner of the two fuel conduits 62, with regard to the central axis 76.

The first portion of the working medium 86 (generated from a first of the two partial flows 102) and the first portion of the fuel 84 are swirled and mixed together by means of the inner swirling 72 device, thus, generating a first portion of the combustion medium 88.

The first portion of the combustion medium 88 is introduced into the combustion volume 14 and, in the course of this, is ignited by means of the ignition device 104 to generate a flame.

A rate of fuel flow into the inner fuel conduit 62 is set such that the first portion of the combustion medium 88 comprises a stoichiometric ratio of the fuel 84 to the oxygen, in the present example a ratio of 1:2.

Furthermore, a second portion of the fuel 84 is introduced into the outer of the two fuel conduits 64, when said flame reaches a predefined power. A second portion of the working medium 86 (generated from a second of the two partial flows 102) and the second portion of the fuel 84 are swirled and mixed together by means of the outer swirling device 74, thus, generating a second portion of the combustion medium 88.

The second portion of the combustion medium 88 is introduced into the combustion volume 14 and is combusted therein with the aid of said flame, wherein the combustion of the second portion of the combustion medium 88 leads to an extension of the flame and increases fired power.

By means of the helical flow patterns of the combustion medium 88 being discharged through the inner nozzle 78 and the outer nozzle 80 into the combustion volume 14, a recirculation zone 106 (vortex breakdown zone) is generated which is arranged symmetrically with respect to the central axis 76. Due to recirculation of the hot exhaust gas in the recirculation zone 106 a stable/swirl-stabilized flame is established.

Moreover, a sectional plane III across the outer swirling device 74 is depicted in FIG 2.

FIG 3 shows a cross section of the outer swirling device 74, i.e., the radial-flow swirling device, along the sectional plane III from FIG 2.

The outer swirling device 74 comprises a plurality of solid vanes 108 equally spaced in circumference of a first circle 110 with diameter D₁ and twisted by an angle A with respect to a connecting line 114 connecting two opposing vanes 108. The vanes 108 form conduits 114 for an incoming working medium flow 116.

Further, the outer swirling device 74 comprises an injection device 92 composed of a plurality of fuel pegs 118. The fuel pegs 118 are equally spaced in circumference of a second circle 120 with diameter D₂ (D₂ > D₁) in the vicinity of respective leading edges 122 of two neighboring vanes 108. Each of the fuel pegs 118 exhibits a number of orifices through which the fuel is injected into the working medium, particularly in form of fuel jets 124 which penetrate into the working medium. Thereby, a mixture of the fuel and the working medium is created. Said mixture is forced into a helical motion, thus, is swirled, by means of the vanes 108, wherein a swirled combustion medium flow 128 is generated.

While specific embodiments have been described in detail, those with ordinary skill in the art will appreciate that various modifications and alternatives to those details could be developed in light of the overall teachings of the disclosure. Accordingly, the particular arrangements disclosed are meant to be illustrative only and should not be construed as limiting the scope of the claims or disclosure, which are to be given the full breadth of the appended claims, and any equivalents thereof.

## Claims

1. Method for operating a burner (16), wherein
- a fuel (84) and an oxidizing working medium (86) are fed into the burner (16),
- the fuel (84) and the working medium (86) are introduced into a combustion volume (14) and are combusted therein, and
- an exhaust gas from the combustion is fed back into the burner (16), the exhaust gas, together with oxygen, constituting the working medium (86),
**characterized in that** the working medium (86) and the fuel (84), prior to being introduced into the combustion volume (14), are mixed together in the burner (16) to generate a combustion medium (88).

2. Method according to claim 1,
**characterized in that** the working medium (86) and the fuel (84) are swirled by means of a swirling device (72, 74), wherein the combustion medium (88) is generated by swirling the working medium (86) and the fuel (84).

3. Method according to claim 2,
**characterized in that** the fuel (84) is introduced into the working medium (86) in the swirling device (72, 74).

4. Method according to any of the preceding claims,
**characterized in that** the working medium (86) is introduced into a plenum (68) of the burner (16) through a constriction (94), and the oxygen and the exhaust gas are intermixed in the plenum (68) by passing through the constriction (94).

5. Method according to claim 4,
**characterized in that** the working medium (86) is deflected by at least 90° in the constriction (94), particularly around a deflection plate (96).

6. Method according to any of the preceding claims,
**characterized in that** the working medium (86) is divided into two partial flows (102), and the two partial flows (102) are introduced into separate conduits (58, 60) in each case.

7. Method according to claim 6,
**characterized in that** the fuel (84) is admixed to one of the two partial flows (102) to form a first portion of the combustion medium (88), the first portion of the combustion medium (88) is ignited, particularly by means of an ignition device (104), and afterwards the fuel (84) is admixed to the other of the two partial flows (102) to form a second portion of the combustion medium (88).

8. Method according to any of the preceding claims,
**characterized in that** the combustion medium (88) is forced into a helical flow (90) within the burner (16), the helical flow (90) is introduced into the combustion volume (14) and a flow recirculation zone (106), which stabilizes the combustion, is generated in the combustion volume (14), wherein the exhaust gas recirculates in the flow recirculation zone (106).

9. Method for operating a gas turbine (4), wherein a burner (16) of the gas turbine (4) is operated according to any of the preceding claims,
**characterized in that**
- a turbine shaft (22) is set into rotation,
- a first portion of the fuel (84) is introduced into a first fuel conduit (62) of the burner (16), when a rotation frequency of the turbine shaft (22) exceeds a predefined rotation frequency,
- the first portion of the fuel (84) is used to generate a first portion of the combustion medium (88),
- the first portion of the combustion medium (88) is introduced into the combustion volume (14) and, in the course of this, is ignited to generate a flame,
- a rate of fuel flow into the first fuel conduit (62) is set such that the first portion of the combustion medium (88) comprises a predefined ratio, particularly a stoichiometric ratio, of the fuel (84) to the oxygen,
- a second portion of the fuel (84) is introduced into a second fuel conduit (64) of the burner (16), when said flame reaches a predefined power,
- the second portion of the fuel (84) is used to generate a second portion of the combustion medium (88), and
- the second portion of the combustion medium (88) is introduced into the combustion volume (14) and is combusted therein with the aid of said flame.

10. Combustion system (2) comprising a burner (16) with a fuel inlet (18) and a working medium inlet (20), further comprising a pure oxygen supply (28) and an exhaust gas feedback (42), both of which are connected to the working medium inlet (20),
**characterized in that** the burner (16) comprises a mixer (66), a working medium conduit (58, 60) connected to the working medium inlet (20) and a fuel conduit (62, 64) connected to the fuel inlet (18), the working medium conduit (58, 60) and the fuel conduit (62, 64) opening into the mixer (66).

11. Combustion system (2) according to claim 10,
**characterized in that** burner (16) comprises two swirling devices (72, 74), wherein one of the two swirling devices (72, 74) is an axial-flow swirling device (72) and the other of the two swirling devices is an radial-flow swirling device (74).

12. Combustion system (2) according to claim 11,
**characterized in that** the axial-flow swirling device (72) comprises a plurality of vanes (82), which exhibit orifices for introducing a fuel into a partial flow (102) of a working medium (86), and the radial swirling device (74) comprises an injection device (92) for introducing the fuel (84) into another partial flow (102) of the working medium (86).

13. Combustion system (2) according to any of the claims 10 to 12,
**characterized in that** the burner (16) comprises a first nozzle (78), particularly a basically circular nozzle (78), and a second nozzle (80), particularly a basically frusto-conical nozzle (80), wherein both nozzles (78, 80) are arranged coaxially with respect to each other and the first nozzle (78) is arranged within the second nozzle (80) at least sectionally.

14. Combustion system (2) according to any of the claims 10 to 13,
**characterized in that** the burner (16) comprises a plenum (68), particularly an annular plenum (68), and a constriction (94) arranged upstream the plenum (68), wherein the constriction (94) is formed by a deflection plate (96) for deflecting a working medium flow.

15. Combustion system (2) according to claim 14,
**characterized in that** the burner (16) comprises two flow conditioners (98, 100) for discharging a working medium (86) out of the plenum (68).
